# EUROPÄISCHE PATENTSCHRIFT

(11) **EP 2 587 085 B1**
(45) Veröffentlichungstag und Bekanntmachung des Hinweises auf die Patenterteilung: **14.09.2016**
(21) Anmeldenummer: 12188605.5
(22) Anmeldetag: 16.10.2012
(51) Int. Cl.: F16D 48/06

(54) **Kraftfahrzeugantriebsstrang und Hydraulikkreis dafür**
Motor vehicle drive train and a hydraulic circuit for the same
Chaîne cinématique de véhicule automobile et circuit hydraulique pour celui-ci

(30) Priorität: 26.10.2011 DE 102011117488
(43) Veröffentlichungstag der Anmeldung: 01.05.2013
(73) Patentinhaber: GETRAG Getriebe- und Zahnradfabrik Hermann Hagenmeyer GmbH & Cie KG, 74199 Untergruppenbach (DE)
(72) Erfinder: Bünder, Carsten, 70563 Stuttgart (DE); Trutschel, Ralf, 34311 Naumburg (DE)
(74) Vertreter: Witte, Weller & Partner Patentanwälte mbB

(56) Entgegenhaltungen:
- EP-A1- 2 314 898
- WO-A1-2010/081743
- DE-A1-102010 008 680
- DE-C1- 4 117 736

## Beschreibung

Die vorliegende Erfindung betrifft einen Hydraulikkreis für einen Kraftfahrzeugantriebsstrang, der eine Reibkupplung zur Übertragung von Antriebsmoment, insbesondere in Form einer Anfahrkupplung, und ein Getriebe mit wenigstens zwei Gangstufen aufweist, die mittels einer Schaltkupplungsanordnung ein- und auslegbar sind, wobei die Reibkupplung mittels eines Kupplungs-Hydraulikzylinders betätigbar ist, der zur Betätigung der Reibkupplung direkt mit einem Pumpenanschluss einer elektromotorisch angetriebenen Pumpe verbunden ist, derart, dass die Reibkupplung durch Verändern der Drehzahl der Pumpe betätigbar ist, und mit einer Schalt-Aktuatoranordnung zur Betätigung der Schaltkupplungsanordnung.

Ferner betrifft die vorliegende Erfindung einen Antriebsstrang für ein Kraftfahrzeug, mit einer Reibkupplung und einem Getriebe, das wenigstens zwei Gangstufen aufweist, und mit einem Hydraulikkreis der oben genannten Art.

Bei manuell betätigbaren Kraftfahrzeugantriebssträngen der oben genannten Art werden die Gangstufen mittels eines Schalthebels ein- und ausgelegt, und die Reibkupplung wird mittels eines Kupplungspedals betätigt. Bei automatisierten Kraftfahrzeugantriebssträngen, wie zum Beispiel automatisierten Schaltgetrieben oder Doppelkupplungsgetrieben, erfolgt die Betätigung der Reibkupplung und einer Schaltkupplungsanordnung durch geeignete Aktuatoranordnungen.

Als Aktuatoren eignen sich generell hydraulische Aktuatoren, elektromotorische Aktuatoren, sowie pneumatische und elektromagnetische Aktuatoren. Hydraulikkreise, die zur Betätigung der Reibkupplung und der Schaltkupplungsanordnung ausgelegt sind, beinhalten typischerweise eine Pumpe, deren Saugseite mit einem Tank verbunden ist und deren Druckseite mit einem Druckregelventil verbunden ist, um druckseitig einen Leitungsdruck zu erzeugen. Aus dem Leitungsdruck werden dann geeignete Drücke zum Betätigen der Reibkupplung sowie zum Betätigen der Schaltkupplungsanordnung abgeleitet. Der Leitungsdruck ist dabei gewöhnlich mindestens so hoch wie der maximale Betätigungsdruck zum Betätigen der Reibkupplung oder der Schaltkupplungsanordnung. Das Ableiten der jeweiligen Betätigungsdrücke aus dem Leitungsdruck erfordert in der Regel wiederum jeweilige Druckregelventile, die einem Reibkupplungskreis bzw. einem Schaltkupplungskreis zugeordnet sind. Derartige Ventile erfordern bei Fertigung und Montage hohe Anforderungen an die Sauberkeit.

Ferner sind derartige Druckregelventile vergleichsweise teuer. Zudem ist der Leitungsdruck häufig mittels eines zusätzlich vorzusehenden Druckspeichers konstant zu halten.

Die Pumpe wird hierbei häufig mittels des Verbrennungsmotors angetrieben. Bei Kraftfahrzeugantriebssträngen, die hybridisiert sind, ist dann das Betätigen der Reibkupplung und/oder der Schaltkupplungsanordnung nur bei laufendem Verbrennungsmotor möglich, was einen rein elektrischen Fahrbetrieb und/oder ein "Segeln" unmöglich macht oder zumindest erschwert.

Das Dokument WO2010/081743 A1 wird als nächstliegender Stand der Technik betrachtet und offenbart den Oberbegriff von Anspruch 1.

Aus dem Dokument EP 1 635 091 B1 ist ein derartiger Hydraulikkreis für ein Doppelkupplungsgetriebe bekannt, wobei für die zwei Kupplungen jeweils ein eigenes Druckregelventil vorgesehen ist. Ferner ist ein Wechselventil vorgesehen, das die Druckseiten der Druckregelventile alternativ mit einer Zuleitung zu einem Schaltkupplungs-Hydraulikkreis verbindet. Folglich können durch lediglich zwei Regelventile sowohl die beiden Reibkupplungen des Doppelkupplungsgetriebes betätigt als auch die Gänge geschaltet werden.

Ferner offenbart das Dokument EP 1 236 918 B1 einen Hydraulikkreis für eine Reibkupplung, insbesondere in Form einer Anfahrkupplung. Dabei wird eine Pumpe bereitgestellt. Bei diesem Hydraulikkreis ist eine Pumpe bereitgestellt, die mittels eines Elektromotors antreibbar und hinsichtlich ihrer Drehzahl regelbar ist. Ein Druckanschluss der Pumpe ist direkt mit einem Kupplungs-Hydraulikzylinder verbunden, also ohne Zwischenschaltung eines Druckregelventils. Die Reibkupplung wird bei diesem Hydraulikkreis durch Verändern der Drehzahl der Pumpe betätigt, derart, dass der von der Pumpe abgegebene Volumenstrom verändert wird. An der Verbindung zwischen der Pumpe und dem Kupplungs-Hydraulikzylinder ist ein Drucksensor vorgesehen, so dass der von der Pumpe über den Volumenstrom bereitgestellte Druck mittels der Drehzahl der Pumpe regelbar ist.

Schließlich offenbart die DE 10 2010 001 069 A1 eine Schaltkupplungs-Aktuatorik, bei der ein Drehschieberventil verwendet wird, um mehrere Schalt-Hydraulikzylinder mittels eines einzelnen Druckregelventils ansteuern zu können.

Vor diesem Hintergrund ist es eine Aufgabe der Erfindung, einen verbesserten Hydraulikkreis für einen Kraftfahrzeugantriebsstrang sowie einen Antriebsstrang mit einem derartigen Hydraulikkreis anzugeben, wobei der Hydraulikkreis und der Antriebsstrang kostengünstig herstellbar sind.

Diese Aufgabe wird bei dem eingangs genannten Hydraulikkreis dadurch gelöst, dass zwischen dem Pumpenanschluss und dem Kupplungs-Hydraulikzylinder eine erste Ventilanordnung angeordnet ist, die in einer ersten Ventilstellung eine direkte Verbindung des Pumpenanschlusses mit dem Kupplungs-Hydraulikzylinder einrichtet und die in einer zweiten Ventilstellung eine direkte Verbindung des Pumpenanschlusses mit einem Schalt-Hydraulikzylinder einrichtet, der mit der Schaltkupplungsanordnung koppelbar ist, derart, dass die Schaltkupplungsanordnung in der zweiten Ventilstellung durch Verändern der Drehzahl der Pumpe in einer ersten Schaltrichtung betätigbar ist.

Ferner wird die obige Aufgabe gelöst durch einen Antriebsstrang der eingangs genannten Art, der mit einem erfindungsgemäßen Hydraulikkreis ausgestattet ist.

Bei dem erfindungsgemäßen Hydraulikkreis ist zur Betätigung einer Reibkupplung und einer Schaltkupplungsanordnung vorzugsweise nur eine einzelne Pumpe vorgesehen, die elektromotorisch angetrieben ist. Mittels einer ersten Ventilanordnung kann der Pumpenanschluss (Druckanschluss) alternativ mit dem Kupplungs-Hydraulikzylinder oder mit einem Schalt-Hydraulikzylinder verbunden werden, wobei in beiden Ventilstellungen jeweils eine direkte Verbindung zwischen dem Pumpenanschluss und dem Hydraulikzylinder eingerichtet ist. Hierdurch ist es möglich, sowohl die Reibkupplung als auch die Schaltkupplungsanordnung zu betätigen, ohne dass in dem Hydraulikkreis Proportional- oder Druckregelventile vorhanden sein müssen. Der Hydraulikkreis kann daher kostengünstig gefertigt und montiert werden, da keine hohen Sauberkeitsanforderungen bei Fertigung bzw. Montage erforderlich sind.

Unter einer direkten Verbindung soll vorliegend verstanden werden, dass der Pumpenanschluss im Wesentlichen ohne Unterbrechung mit dem jeweiligen Hydraulikzylinder verbunden ist, wobei allenfalls Wegeventile oder Rückschlagventile in der Verbindungsleitung vorhanden sind. Da derartige Ventile im Gegensatz zu druckregelnden Proportionalventilen keine hohen Sauberkeitsanforderungen erfüllen müssen, kann ein solcher Hydraulikkreis kostengünstig hergestellt werden.

Die Reibkupplung kann eine trockene Reibkupplung oder eine nasslaufende Reibkupplung, wie beispielsweise eine Lamellenkupplung, sein. Die Reibkupplung kann dabei von einem normalerweise offenen oder von einem normalerweise geschlossenen Typ sein.

Vorzugsweise handelt es sich bei der Reibkupplung um eine Anfahrkupplung. Es kann sich jedoch auch um eine Hang-on-Kupplung eines Allrad-Antriebsstranges handeln. Der Kupplungs-Hydraulikzylinder ist beispielsweise ein einfach wirkender Zylinder.

Die Aufgabe wird somit vollkommen gelöst.

Von besonderem Vorzug ist es, wenn die Pumpe als bidirektionale Pumpe mit einem ersten Pumpenanschluss und einem zweiten Pumpenanschluss ausgebildet ist.

Bei dieser Ausführungsform kann beim Betätigen der Reibkupplung die Drehrichtungsumkehr dazu verwendet werden, um die Reibkupplung beispielsweise schneller wieder zu öffnen (oder schneller wieder zu schließen). Durch Verwendung einer bidirektionalen Pumpe ist es ferner vorzugsweise möglich, den Schalt-Hydraulikzylinder sowohl in einer ersten Schaltrichtung als auch in einer zweiten Schaltrichtung zu betätigen.

Gemäß einer besonders bevorzugten Ausführungsform ist der Schalt-Hydraulikzylinder daher als doppelt wirkender Zylinder ausgebildet, der einen ersten, mit der ersten Ventilanordnung verbundenen Zylinderanschluss und einen zweiten Zylinderanschluss aufweist, wobei eine zweite Ventilanordnung zwischen dem zweiten Pumpenanschluss und dem zweiten Zylinderanschluss angeordnet ist, derart, dass die Schaltkupplungsanordnung durch Verändern der Drehzahl der Pumpe in einer Drehrichtung in der ersten Schaltrichtung und bei umgekehrter Drehrichtung in einer zweiten Schaltrichtung betätigbar ist.

Hierdurch ist beispielsweise der Hydraulikzylinder dazu ausgelegt, ein Schaltkupplungspaket zu betätigen, das eine erste Schaltkupplung und eine zweite Schaltkupplung aufweist, die alternativ zur Verbindung eines zugeordneten Losrades mit einer Welle ausgebildet sind. Das Schaltkupplungspaket kann dabei vorzugsweise zwei Synchron-Schaltkupplungen aufweisen und beinhaltet ferner vorzugsweise eine Neutralstellung.

Ferner kann es vorteilhaft sein, wenn das Schaltkupplungspaket mit einer Rasteinrichtung verbunden ist, die ein Einrasten des Schaltkupplungspaketes in den zwei oder drei Schaltstellungen ermöglicht.

Von besonderem Vorzug ist es bei der oben genannten Ausführungsform, wenn die erste Ventilanordnung und die zweite Ventilanordnung so angesteuert sind, dass sie gleichzeitig betätigbar sind.

Hierdurch kann die Ansteuerung deutlich vereinfacht werden. Zudem kann durch diese Ansteuerung gewährleistet werden, dass der Hydraulikzylinder entweder in der ersten Schaltrichtung oder in der zweiten Schaltrichtung betätigt wird.

Bei einer alternativen Ausführungsform zur Betätigung eines solchen Schaltkupplungspaketes ist der Schalt-Hydraulikzylinder als doppelt wirkender Zylinder ausgebildet, der einen ersten und einen zweiten Zylinderanschluss aufweist, wobei zwischen der ersten Ventilanordnung und dem Schalt-Hydraulikzylinder eine dritte Ventilanordnung angeordnet ist, die dazu ausgebildet ist, die erste Ventilanordnung mit dem ersten oder mit dem zweiten Zylinderanschluss zu verbinden, um die Schaltkupplungsanordnung in der ersten oder in einer zweiten Schaltrichtung zu betätigen bzw. zu bewegen.

Bei dieser Ausführungsform kann die Saugseite der Pumpe ohne Zwischenschaltung eines Ventils mit dem Tank verbunden werden.

Insgesamt ist es vorteilhaft, wenn der Hydraulikkreis einen weiteren Kupplungs-Hydraulikzylinder zum Betätigen einer weiteren Reibkupplung und eine weitere Pumpe aufweist, die elektromotorisch angetrieben ist und einen weiteren Pumpenanschluss aufweist, der zur Betätigung der weiteren Reibkupplung direkt mit dem weiteren Kupplungs-Hydraulikzylinder verbunden ist.

Diese Ausführungsform eignet sich insbesondere zum Betätigen einer Doppelkupplungsanordnung eines Doppelkupplungsgetriebes. Für jede der Reibkupplungen ist dabei eine eigene Pumpe mit einem eigenen Elektromotor vorgesehen, derart, dass die zwei Reibkupplungen gleichzeitig, insbesondere überschneidend, betätigt werden können. In beiden Fällen erfolgt das Regeln des Druckes und/oder des Weges des jeweiligen Kupplungs-Hydraulikzylinders über die Drehzahl des zugeordneten Elektromotors.

Bei dieser Ausführungsform ist es von besonderem Vorteil, wenn der Hydraulikkreis eine weitere erste Ventilanordnung aufweist, die in einer ersten Ventilstellung eine direkte Verbindung des weiteren Pumpenanschlusses mit dem weiteren Kupplungs-Hydraulikzylinder einrichtet und die in einer zweiten Ventilstellung eine direkte Verbindung des weiteren Pumpenanschlusses mit dem Schalt-Hydraulikzylinder und/oder mit einem weiteren Schalt-Hydraulikzylinder einrichtet, derart, dass die Schaltkupplungsanordnung in der zweiten Ventilstellung der weiteren ersten Ventilanordnung durch Verändern der Drehzahl der weiteren Pumpe in einer ersten Schaltrichtung betätigbar ist.

Bei einer Ausführungsform sind die Pumpe und die weitere Pumpe parallel an den vorzugsweise einzigen Schalt-Hydraulikzylinder angeschlossen. Die erste Ventilanordnung und die weitere erste Ventilanordnung sorgen dafür, dass vorzugsweise jene Pumpe mit dem Schalt-Hydraulikzylinder verbindbar ist, die dem inaktiven Teilgetriebe des Doppelkupplungsgetriebes zugeordnet ist. Hierdurch ist es möglich, eine Gangstufe des Doppelkupplungsgetriebes (insbesondere des inaktiven Teilgetriebes) ein- oder auszulegen, indem die jeweilige erste Ventilanordnung mit dem Schalt-Hydraulikzylinder verbunden wird. Dies ist vorzugsweise jene Pumpe, die dem inaktiven Teilgetriebe zugeordnet ist, dessen zugeordnete Reibkupplung nicht betätigt werden muss. Demzufolge kann insbesondere im inaktiven Teilgetriebe eine Gangstufe eingelegt werden, die eine Zielgangstufe für einen nachfolgenden Gangwechsel vom aktiven in das inaktive Teilgetriebe darstellt.Bei einer alternativen Ausführungsform weist die Schalt-Aktuatoranordnung einen ersten und einen weiteren Schalt-Hydraulikzylinder auf. Der eine Schalt-Hydraulikzylinder kann dabei beispielsweise den Gangstufen des einen Teilgetriebes zugeordnet sein, und der weitere Schalt-Hydraulikzylinder den Gangstufen des anderen Teilgetriebes. Dabei ist es bevorzugt, wenn der oder die Pumpenanschlüsse der einen Pumpe mit dem ersten Schalt-Hydraulikzylinder gekoppelt sind, und wenn der oder die Pumpenanschlüsse der weiteren Pumpe mit dem weiteren Schalt-Hydraulikzylinder gekoppelt sind. Auch bei dieser Ausführungsform ist es möglich, dass insbesondere in dem inaktiven Teilgetriebe eine Gangstufe ein- oder ausgelegt wird.

Insgesamt ist es ferner vorteilhaft, wenn die erste Ventilanordnung und/oder die zweite Ventilanordnung und/oder die dritte Ventilanordnung als Wegeventil ausgebildet sind.

Generell ist es auch beispielsweise möglich, in die Ventilanordnungen ein Wechselventil zu integrieren. Auch die Verwendung von solchen Ventilen führt jedoch dazu, dass nur geringe Anforderungen hinsichtlich der Sauberkeit bei Fertigung und Montage erforderlich sind.

Ferner ist es vorteilhaft, wenn die Verbindung zwischen der ersten Ventilanordnung und dem Kupplungs-Hydraulikzylinder über eine Drossel oder Blende mit einem Niederdruckbereich wie beispielsweise einem Tank verbunden ist.

Durch diese Maßnahme kann die Regelbarkeit des Druckes in dem jeweiligen Kupplungs-Hydraulikzylinder verbessert werden, da während des Druckaufbaus immer eine gewisse Leckage über die Drossel oder Blende hin zu dem Niederdruckbereich stattfindet.

In entsprechender Weise ist es bevorzugt, wenn die Verbindung zwischen dem Schalt-Hydraulikzylinder und einer Ventilanordnung, über die der Schalt-Hydraulikzylinder mit einem Pumpenanschluss verbindbar ist, über eine Drossel oder Blende mit einem Niederdruckbereich verbunden ist.

Hierdurch lässt sich auch die Regelbarkeit des Druckes zum Betätigen der Schaltkupplungsanordnung verbessern.

Bei einem doppelt wirkenden Hydraulikzylinder mit zwei Zylinderanschlüssen ist vorzugsweise jeder Zylinderanschluss über eine Drossel oder Blende mit dem Niederdruckbereich verbunden.

Generell ist es möglich, mittels des Schalt-Hydraulikzylinders nur ein einzelnes Schaltkupplungspaket der Schaltkupplungsanordnung zu betätigen.

Von besonderem Vorzug ist es jedoch, wenn der Schalt-Hydraulikzylinder mit einer Schaltwelle gekoppelt ist, die mittels des Schalt-Hydraulikzylinders zumindest in der ersten Schaltrichtung bewegbar ist und die mittels eines Wählantriebs in einer Wählrichtung bewegbar ist.

Bei dieser Ausführungsform ist die Schaltwelle vorzugsweise mit einer Mehrzahl von Schaltkupplungspaketen verbindbar (durch einen jeweiligen Wählvorgang). Demzufolge können in einer Variante sämtliche Gangstufen des Getriebes (typischerweise fünf, sechs, sieben oder mehr Gangstufen) mittels eines einzelnen Schalt-Hydraulikzylinders betätigt werden.

In einer alternativen Variante weist die Schalt-Aktuatoranordnung einen ersten und einen weiteren Schalt-Hydraulikzylinder auf, die jeweils eine Schaltwelle in Schaltrichtung bewegen. Jeder Schaltwelle sind dabei wenigstens zwei Gangstufen und ein Schaltkupplungspaket zugeordnet, vorzugsweise jedoch ist wenigstens einer der zwei Schaltwellen eine Mehrzahl von Schaltkupplungspaketen zugeordnet. Hierdurch können ebenfalls fünf, sechs, sieben oder mehr Gangstufen betätigt werden.

Demzufolge ist es bei dieser Variante bevorzugt, wenn der weitere Schalt-Hydraulikzylinder mit einer weitere Schaltwelle gekoppelt ist, die mittels des weiteren Schalt-Hydraulikzylinders zumindest in der ersten Schaltrichtung bewegbar und mittels eines Wählantriebs in einer Wählrichtung bewegbar ist.

Hierbei versteht sich, dass die Schalt-Aktuatoranordnung zwei Wählantriebe für die zwei Schaltwellen aufweisen kann, wobei diese jedoch gegebenenfalls auch miteinander integriert sein können.

Der Hydraulikkreis zum Betätigen der Reibkupplung(en) und sämtlicher Gangstufen des Getriebes kann daher mittels lediglich Pumpen und zweier Elektromotoren sowie vergleichsweise einfacher Ventilanordnungen realisiert werden.

Bei dem Antriebsstrang, der ein Doppelkupplungsgetriebe aufweist, ist es bevorzugt, wenn der Schalt-Hydraulikzylinder mittels einer Schaltwelle sowohl Gangstufen des ersten als auch des zweiten Teilgetriebes betätigen kann. In einer Variante ist es bevorzugt, wenn ein Schalt-Hydraulikzylinder mittels einer ersten Schaltwelle die Gangstufen des ersten Teilgetriebes betätigen kann, und wenn ein weiterer Schalt-Hydraulikzylinder mittels einer weiteren Schaltwelle die Gangstufen des zweiten Teilgetriebes betätigen kann.

Ferner ist es generell möglich, mittels des erfindungsgemäßen Hydraulikkreises in einem Doppelkupplungsgetriebe in dem inaktiven (passiven) Teilgetriebe eine Zielgangstufe nicht nur einzulegen sondern auch vorzuspannen, das heißt eine Gangstufe vor dem Auslegen gegen Hinterlegungen in der Synchron-Schaltkupplung vorzuspannen, derart, dass das Auslegen der Gangstufe anschließend schneller erfolgen kann.

Insgesamt ist mit dem erfindungsgemäßen Hydraulikkreis und dem zugeordneten Antriebsstrang generell wenigstens einer der folgenden Vorteile realisierbar.

In einem Doppelkupplungsgetriebe ist es funktionsbedingt nicht erforderlich, dass eine Schaltkupplungsanordnung und eine Reibkupplung desselben Teilgetriebes gleichzeitig betätigt werden.

Die Mehrfachnutzung der Anordnung aus Pumpe und Elektromotor kann hydraulisch durch ein oder mehrere Wegeventile erfolgen, wie oben beschrieben, kann jedoch auch mechanisch durch Kupplungen realisiert werden.

Insgesamt ergeben sich hierdurch Bauraum-, Gewichts- und Kostenvorteile, da separate Elektropumpen für die Schaltaktuatorik zuzüglich zugehöriger Peripherie wie Leistungsendstufen nicht erforderlich sind.

Die oben beschriebenen Wegeventile sind vorzugsweise magnetisch ansteuerbare Wegeventile.

Generell ist es auch denkbar, die Schaltkupplungspakete der Schaltkupplungsanordnung durch eine oder zwei Schaltwalze(n) zu betätigen. In diesem Fall können Elektromotoren zum Betätigen von Reibkupplungen mechanisch mit den Schaltwalzen verbunden bzw. von diesen getrennt werden.

Die Ventilanordnungen zum alternativen Verbinden einer Pumpe mit einem Kupplungs-Hydraulikzylinder oder mit einem Schalt-Hydraulikzylinder sind vorzugsweise so ausgebildet, dass dann, wenn der Schalt-Hydraulikzylinder gesperrt ist, dieser durch den zuletzt eingestellten Hydraulikdruck gehalten wird. Hierdurch kann ein Schwimmen des Hydraulikzylinders verhindert werden, insbesondere bei einem doppelt wirkenden Hydraulikzylinder. Hierdurch können gegebenenfalls aufwändige Federanordnungen und/oder Rastanordnungen in der Schaltaktuatorik vermieden werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeugantriebsstranges mit einem erfindungsgemäßen Hydraulikkreis gemäß einer ersten Ausführungsform;
- Fig. 2: einen weiteren Kraftfahrzeugantriebsstrang mit einer weiteren Ausführungsform eines erfindungsgemäßen Hydraulikkreises;
- Fig. 3: eine Variante des Hydraulikkreises der Fig. 2;
- Fig. 4: eine weitere Variante des Hydraulikkreises der Fig. 2;
- Fig. 5: eine weitere Variante des Hydraulikkreises der Fig. 2 oder der Fig. 3; und
- Fig. 6: eine weitere Variante des Hydraulikkreises der Fig. 4.

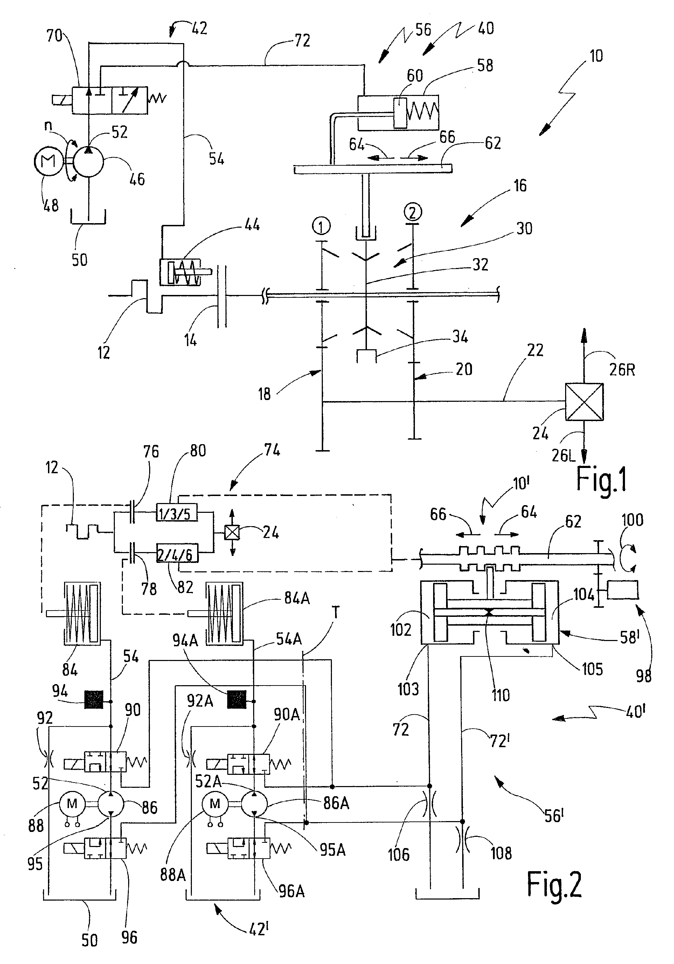

In Fig. 1 ist eine erste Ausführungsform eines Antriebsstranges für ein Kraftfahrzeug, insbesondere einen Personenkraftwagen, generell mit 10 bezeichnet. Der Antriebsstrang 10 weist einen Antriebsmotor 12, wie beispielsweise einen Verbrennungsmotor oder einen Hybrid-Antriebsmotor, eine Reibkupplung 14 in Form einer Anfahrkupplung sowie ein Getriebe 16 in Form eines mehrgängigen Vorgelegegetriebes auf. Die Reibkupplung 14 ist als trockene oder als nasslaufende Reibkupplung ausgebildet. Das Getriebe 16 weist einen ersten Radsatz 18 für eine erste Gangstufe 1 sowie einen zweiten Radsatz 20 für eine zweite Gangstufe 2 auf. Es versteht sich, dass das Getriebe 16 wenigstens zwei, insbesondere jedoch fünf, sechs, sieben, acht oder mehr Gangstufen aufweisen kann, die jeweils durch Radsätze oder Kombinationen von Radsätzen gebildet sind. Ferner beinhaltet das Getriebe 16 eine Getriebeausgangswelle 22, die über ein Differential 24 mit Antriebswellen 26L, 26R für angetriebene Räder des Kraftfahrzeuges verbindbar ist. Zum Ein- und Auslegen der Gangstufen 1, 2 des Getriebes 16 ist eine Schaltkupplungsanordnung 30 vorgesehen. Die Schaltkupplungsanordnung 30 beinhaltet ein Schaltkupplungspaket 32, das eine erste Synchron-Schaltkupplung für die Gangstufe 1 und eine zweite Synchron-Schaltkupplung für die Gangstufe 2 aufweist. Das Schaltkupplungspaket 32 ist mittels einer Schaltmuffe 34 betätigbar, die in axialer Richtung verschiebbar ist, um entweder die Gangstufe 1 oder die Gangstufe 2 einzulegen oder eine Neutralstellung dazwischen einzurichten.

Zum Einrichten weiterer Gangstufen versteht sich, dass die Schaltkupplungsanordnung 30 weitere derartige Schaltkupplungspakete beinhalten kann.

Der Antriebsstrang 10 beinhaltet ferner einen Hydraulikkreis 40. Der Hydraulikkreis 40 weist einen Kupplungs-Hydraulikkreis 42 auf, der einen Kupplungs-Hydraulikzylinder 44 beinhaltet. Der Kupplungs-Hydraulikzylinder 44 ist als einfach wirkender Zylinder ausgebildet. Eine Kolbenstange des Kupplungs-Hydraulikzylinders 44 betätigt direkt oder über ein Gestänge die Reibkupplung 14.

Ferner weist der Hydraulikkreis 40 eine Pumpe 46 auf, die vorzugsweise als Rotationspumpe ausgebildet ist. Die Pumpe 46 ist mit einem Elektromotor 48 gekoppelt, der die Pumpe 46 mit einer Drehzahl n antreibt.

Eine Saugseite der Pumpe 46 ist mit einem Niederdruckbereich wie einem Tank 50 verbunden. Eine Druckseite der Pumpe 46 ist mit einem Pumpenanschluss 52 verbunden, der zur Betätigung der Reibkupplung 14 über eine direkte Verbindung 54 mit dem Kupplungs-Hydraulikzylinder 44 verbunden bzw. verbindbar ist.

Der Hydraulikkreis 40 weist ferner einen Schalt-Hydraulikkreis 56 auf, der einen Schalt-Hydraulikzylinder 58 beinhaltet. Der Schalt-Hydraulikzylinder 58 ist vorliegend als einfach wirkender Hydraulikzylinder ausgebildet, kann jedoch auch als doppelt wirkender Zylinder ausgebildet sein. Der Schalt-Hydraulikzylinder 58 weist einen Kolben 60 auf, der mit einem Schaltelement 62 wie einer Schaltstange oder einer Schaltwelle verbunden ist. Mittels des Schalt-Hydraulikzylinders 58 kann das Schaltelement 62 in einer ersten Schaltrichtung 64 und in einer zweiten Schaltrichtung 66 bewegt werden. Das Schaltelement 62 ist beispielsweise über ein Schaltglied wie eine Schaltgabel oder eine Schaltwippe mit der Schaltmuffe 34 verbunden, derart, dass beim Bewegen des Schaltelements 62 in der ersten Schaltrichtung 64 die erste Gangstufe 1 eingelegt wird, und beim Bewegen des Schaltelements 62 in der zweiten Schaltrichtung 66 die zweite Gangstufe 2 eingelegt wird.

Ferner beinhaltet der Hydraulikkreis 40 eine erste Ventilanordnung 70 in Form eines 3-2-Wegeventils, das elektromagnetisch angesteuert werden kann. In einer ersten Ventilstellung richtet die erste Ventilanordnung 70 die direkte Verbindung 54 zwischen dem Pumpenanschluss 52 und dem Kupplungs-Hydraulikzylinder 44 ein. Der Schalt-Hydraulikzylinder 58 ist in dieser Position durch die erste Ventilanordnung 70 gesperrt. In der zweiten Ventilstellung der ersten Ventilanordnung 70 ist eine direkte Verbindung 72 zwischen dem Pumpenanschluss 52 und dem Schalt-Hydraulikzylinder 58 eingerichtet, und der Kupplungs-Hydraulikzylinder 44 ist gesperrt.

In der ersten Ventilstellung kann durch Einstellen der Drehzahl n des Elektromotors 48 der in den Kupplungs-Hydraulikzylinder 44 fließende Volumenstrom und folglich der Druck auf die Reibkupplung 14 eingestellt, vorzugsweise geregelt werden (in diesem Fall kann an der Verbindung 54 ein Drucksensor vorgesehen sein). Durch Verändern der Drehzahl n kann folglich die Reibkupplung 14 betätigt werden. In der zweiten Ventilstellung verbleibt die Reibkupplung 14 in der vorab eingestellten Position, und es kann der Schalt-Hydraulikzylinder 58 durch Verändern der Drehzahl n des Elektromotors 48 mit einem geringeren oder größeren Volumenstrom versorgt werden, um hierdurch die Schaltmuffe 34 in der ersten Schaltrichtung 64 oder in der zweiten Schaltrichtung 66 zu bewegen, oder das Schaltkupplungspaket 32 in der Neutralstellung zu belassen.

Folglich ist zum Betätigen der Reibkupplung 44 und zum Ein- und Auslegen der Gangstufen 1, 2 des Getriebes 16 nur eine einzelne elektromotorisch angetriebene Pumpe 46 vorzusehen, sowie ein einfaches Wegeventil, das den Pumpenanschluss 52 entweder mit dem Kupplungs-Hydraulikkreis 42 oder mit dem Schalt-Hydraulikkreis 56 direkt verbindet.

Sofern das Getriebe 16 mehr als zwei Gangstufen aufweist, kann das Schaltelement 62 als Schaltwelle ausgebildet sein, die ferner verdrehbar ist, um unterschiedliche Schaltkupplungspakete 32 anzuwählen.

Auch in diesem Fall kann der Hydraulikkreis den oben beschriebenen einfachen Aufbau besitzen.

In Fig. 2 ist eine weitere Ausführungsform eines Antriebsstranges 10' gezeigt, der einen Hydraulikkreis 40' aufweist. Der Antriebsstrang 10' und der Hydraulikkreis 40' entsprechen hinsichtlich Aufbau und Funktionsweise generell dem Antriebsstrang 10 bzw. dem Hydraulikkreis 40 der Fig. 1. Gleiche Elemente sind daher durch gleiche Bezugszeichen gekennzeichnet. Im Folgenden werden im Wesentlichen die Unterschiede erläutert.

Der Antriebsstrang 10' weist ein Doppelkupplungsgetriebe 74 mit einer ersten Reibkupplung 76 und einer zweite Reibkupplung 78 auf. Die erste Reibkupplung 76 ist einem ersten Teilgetriebe 80 für die ungeraden Gangstufen zugeordnet. Die zweite Reibkupplung 78 ist einem zweiten Teilgetriebe 82 mit den geraden Gangstufen zugeordnet. Die Ausgänge der Teilgetriebe 80, 82 sind mit einer nicht näher bezeichneten Getriebeausgangswelle verbunden, die mit einem Differential 24 verbunden ist.

Der Kupplungs-Hydraulikkreis 42' weist einen ersten Kupplungs-Hydraulikzylinder 84 und einen zweiten Kupplungs-Hydraulikzylinder 84A auf. Der erste Kupplungs-Hydraulikzylinder 84 betätigt die erste Reibkupplung 76. Der zweite Kupplungs-Hydraulikzylinder 84A betätigt die zweite Reibkupplung 78.

Ferner beinhaltet der Kupplungs-Hydraulikkreis 42' eine erste Pumpe 86 und eine zweite Pumpe 86A. Die erste Pumpe 86 ist mittels eines ersten Elektromotors 88 angetrieben. Die zweite Pumpe 86A ist mittels eines zweiten Elektromotors 88 A angetrieben.

Die erste Pumpe 86 weist einen ersten Pumpenanschluss 52 auf, der über eine erste Ventilanordnung 90 und eine erste Verbindung 54 mit dem ersten Kupplungs-Hydraulikzylinder 84 verbunden ist. In entsprechender Weise weist die zweite Pumpe 86A einen zweiten Pumpenanschluss 52A auf, der über eine weitere erste Ventilanordnung 90A und eine weitere Verbindung 54A mit dem zweiten Kupplungs-Hydraulikzylinder 84A verbunden ist.

Die Verbindung 54 ist über eine erste Blende 92 mit dem Tank 50 verbunden. Die weitere Verbindung 54A ist über eine weitere Blende 92A mit dem Tank 50 verbunden. Ferner ist im Bereich der Verbindung 54 ein erster Drucksensor 94 angeschlossen, und an der weiteren Verbindung 54A ist ein weiterer Drucksensor 94A angeschlossen.

Die erste Pumpe 86 ist als bidirektionale Pumpe ausgebildet, die von dem ersten Motor 88 in beiden Drehrichtungen angetrieben werden kann und einen weiteren Pumpenanschluss 95 aufweist. Der weitere Pumpenanschluss 95 ist über eine zweite Ventilanordnung 96 mit dem Tank 50 verbunden. In entsprechender Weise ist die zweite Pumpe 86A als bidirektionale Pumpe ausgebildet, die mittels des zweiten Motors 88A in beiden Drehrichtungen betrieben werden kann und einen weiteren Pumpenanschluss 95A aufweist. Der weitere Pumpenanschluss 95A ist über eine weitere zweite Ventilanordnung 96A mit dem Tank 50 verbunden.

Der Schalt-Hydraulikkreis 56' weist einen doppelt wirkenden Schalt-Hydraulikzylinder 58' auf. Das Schaltelement 62 ist als Welle ausgebildet, die mittels des Schalt-Hydraulikzylinders 58' in der ersten Schaltrichtung 64 und in der zweiten Schaltrichtung 66 bewegbar ist. Es ist schematisch angedeutet, dass die Schaltwelle 62 mit einer Mehrzahl von Schaltmuffen 34 koppelbar ist, die jeweils durch Verdrehen der Schaltwelle 62 angewählt werden. Zu diesem Zweck ist ein Wählantrieb 98 vorgesehen, mittels dessen die Schaltwelle 62 in einer Wählrichtung 100 bewegt (zum Beispiel verdreht) werden kann. Der Wählantrieb 98 kann beispielsweise einen einfachen Elektromotor aufweisen, da zum Wählen keine hohen Kräfte aufgebracht werden müssen. Ferner muss der Elektromotor nicht über eine aufwändige Übersetzung mit der Schaltwelle 62 verbunden sein.

Ferner ist angedeutet, dass der Schalt-Hydraulikzylinder 58' in einer Mehrzahl von relativen Axialstellungen mit der Schaltwelle 62 verbindbar ist. Alternativ hierzu kann die Schaltwelle 62 vorzugsweise in einer Mehrzahl von axialen Relativstellungen mit einer jeweiligen Schaltmuffe 34 verbunden werden, wie es dem Grunde nach in dem Dokument DE 10 2008 031 815 A1 offenbart ist, auf dessen Offenbarungsgehalt vorliegend vollumfänglich Bezug genommen werden soll.

Alternativ kann der Schalt-Hydraulikzylinder 58' zur Betätigung einer Schaltwelle 62 dienen, wie sie beispielsweise in dem Dokument DE 10 2004 052 804 B3 offenbart ist, auf dessen Offenbarungsgehalt vorliegend vollumfänglich Bezug genommen wird.

Der Schalt-Hydraulikzylinder 58' weist einen ersten Zylinderraum 102 auf, der mit einem ersten Zylinderanschluss 103 verbunden ist. Ferner weist der Schalt-Hydraulikzylinder 58' einen zweiten Zylinderraum 104 auf, der mit einem zweiten Zylinderanschluss 105 verbunden ist.

Der erste Zylinderanschluss 103 ist über eine dritte Blende 106 mit dem Tank 50 verbunden. Der zweite Zylinderanschluss 105 ist über eine vierte Blende 108 mit dem Tank 50 verbunden. Ferner sind die zwei Zylinderräume 102, 104 über eine fünfte Blende 110 miteinander verbunden.

Die erste Ventilanordnung 90 ist als 4-2-Wegeventil ausgebildet und weist eine erste Schaltstellung auf, in der der erste Pumpenanschluss 52 direkt über die Verbindung 54 mit dem ersten Kupplungs-Hydraulikzylinder 84 verbunden ist. In einer zweiten Schaltstellung ist der erste Kupplungs-Hydraulikzylinder 84 gesperrt, und die erste Ventilanordnung 90 richtet eine direkte Verbindung 72 zwischen dem ersten Pumpenanschluss 52 und dem ersten Zylinderanschluss 103 ein. Die weitere erste Ventilanordnung 90A ist identisch aufgebaut wie die erste Ventilanordnung 90 und richtet entweder eine direkte Verbindung 54A zu dem zweiten Kupplungs-Hydraulikzylinder 84A ein, oder richtet eine direkte Verbindung 72 mit dem ersten Zylinderanschluss 103 ein. Die zwei ersten Ventilanordnungen 90, 90A sind parallel an den ersten Zylinderanschluss 103 angeschlossen.

Die zweite Ventilanordnung 96 und die weitere zweite Ventilanordnung 96A sind identisch aufgebaut wie die ersten Ventilanordnungen 90, 90A und richten entweder eine direkte Verbindung zwischen dem weiteren Pumpenanschluss 95/95A und dem Tank 50 ein, oder richten eine weitere direkte Verbindung 72' zwischen den weiteren Pumpenanschlüssen 95/95A und dem zweiten Zylinderanschluss 105 ein. Die zweite Ventilanordnung 96 und die weitere zweite Ventilanordnung 96A sind insoweit ebenfalls parallel mit dem zweiten Zylinderanschluss 105 verbunden.

Das Doppelkupplungsgetriebe 74 kann im Wesentlichen drei Betriebszustände haben. In einem ersten Betriebszustand ist die erste Reibkupplung 76 geschlossen, und das erste Teilgetriebe 80 ist aktiv. Hierbei ist die zweite Reibkupplung 78 geöffnet, und das zweite Teilgetriebe 82 ist inaktiv. In dem zweiten Betriebszustand ist die zweite Reibkupplung 78 geschlossen, und das zweite Teilgetriebe 82 ist aktiv. Hierbei ist die erste Reibkupplung 76 geöffnet, und das erste Teilgetriebe 80 ist inaktiv. In einem dritten Betriebszustand werden die zwei Kupplungen 76, 78 überschneidend betätigt, um Gangwechsel unter Last durchzuführen. Zu diesem Zweck sind die zwei Kupplungs-Hydraulikzylinder 84, 84A über die Elektromotoren 88, 88A unabhängig voneinander ansteuerbar.

Wenn beispielsweise der erste Betriebszustand eingerichtet ist, richtet die erste Ventilanordnung 90 eine direkte Verbindung zwischen dem ersten Pumpenanschluss 52 und dem ersten Kupplungs-Hydraulikzylinder 84 ein, um die erste Reibkupplung 76 geschlossen zu halten. Dabei befindet sich die zweite Ventilanordnung 96 in einer Schaltstellung, bei der der weitere Pumpenanschluss 95 mit dem Tank 50 verbunden ist, wie es in Fig. 2 dargestellt ist. In diesem Betriebszustand wird die zweite Pumpe 86A nicht benötigt, um die zweite Reibkupplung 78 zu schließen. Daher kann für diesen inaktiven Zweig des Doppelkupplungsgetriebes 74 ein Betriebszustand eingerichtet werden, bei dem die weitere erste Ventilanordnung 90A und die weitere zweite Ventilanordnung 96A synchron in ihre jeweiligen zweiten Schaltstellungen bewegt werden. Hierbei ist eine direkte Verbindung zwischen dem zweiten Pumpenanschluss 52A und dem ersten Zylinderanschluss 103 eingerichtet, und es ist eine direkte Verbindung zwischen dem weiteren Pumpenanschluss 95A und dem zweiten Zylinderanschluss 105 eingerichtet. Demzufolge kann, je nach Drehrichtung des zweiten Elektromotors 88A, der Kolben des Schalt-Hydraulikzylinders 58' in der ersten Schaltrichtung 64 oder in der zweiten Schaltrichtung 66 bewegt werden.

In dem zweiten Betriebszustand ist die Schaltstellung der Ventile genau umgekehrt, da in diesem Fall die erste Reibkupplung 76 inaktiv und geöffnet ist, so dass der Schalt-Hydraulikzylinder 58' über die erste Pumpe 86 angesteuert werden kann.

Über die erste und die zweite Blende 92, 92A kann jeweils eine gute Regelbarkeit des Druckes der Kupplungs-Hydraulikzylinder 84, 84A und damit des Weges bzw. des übertragbaren Momentes der Reibkupplungen 76, 78) realisiert werden. In entsprechender Weise kann eine gute Regelbarkeit des Weges des Kolbens des Schalt-Hydraulikzylinders 58' mittels der Blenden 106, 108 eingerichtet werden.

In dem dritten Betriebszustand, bei dem die zwei Reibkupplungen 78, 78 überschneidend betätigt werden (die eine wird geöffnet, die andere wird geschlossen), ist es nicht notwendig, eine Gangstufe des ersten oder des zweiten Teilgetriebes 80, 82 einzulegen. In diesem Fall werden die zwei Pumpen 86, 86A ausschließlich zum Betätigen der Reibkupplungen 76, 78 verwendet.

Wie oben erwähnt, werden bei der Ausführungsform der Fig. 2 die erste Ventilanordnung 90 und die zweite Ventilanordnung 96 (bzw. die weitere erste Ventilanordnung 90A und die weitere zweite Ventilanordnung 96A) jeweils synchron bzw. gleichzeitig miteinander betätigt.

Es ist daher möglich, diese zwei Ventile 90, 96 bzw. 90A, 96A jeweils in ein Ventil miteinander zu integrieren.

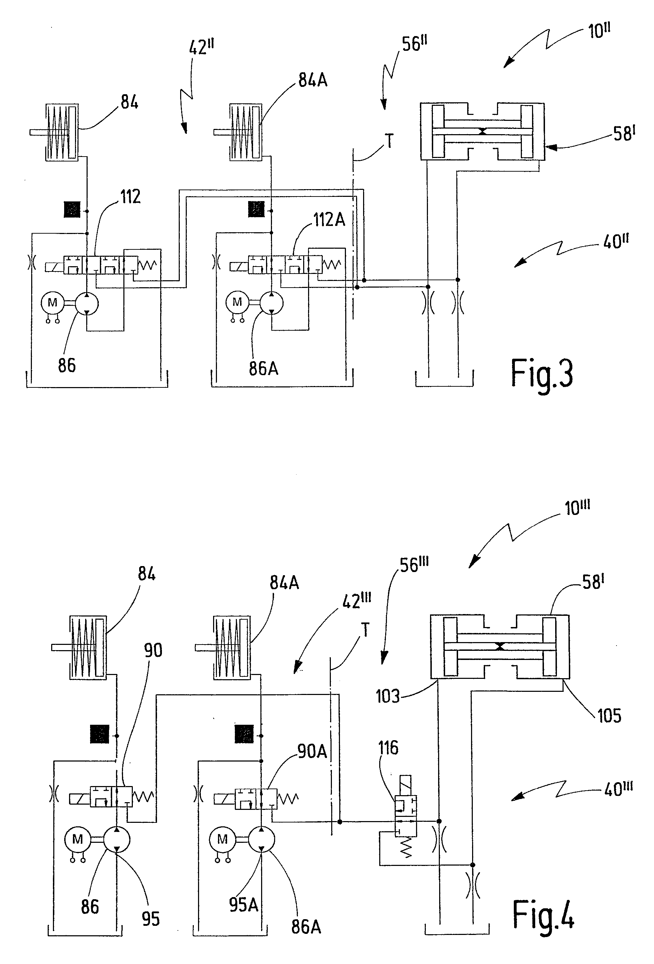

Eine derartige Ausführungsform ist in Fig. 3 gezeigt, bei der die Funktionen der Ventile 90, 96 in ein Ventil 112 integriert sind, das als 4-3-Wegeventil ausgebildet ist. Die Funktionen der Ventile 90A, 96A der Fig. 2 sind bei dieser Ausführungsform in ein Ventil 112A integriert, das ebenfalls als 4-3-Wegeventil ausgebildet ist. Der entsprechende Hydraulikkreis ist in Fig. 3 schematisch mit 40" bezeichnet.

Fig. 4 zeigt eine weitere Ausführungsform eines Antriebsstranges 10'" mit einer weiteren Ausführungsform eines Hydraulikkreises 40"', der generell dem Hydraulikkreis 40' der Fig. 2 entspricht.

Bei dieser Ausführungsform ist anstelle der zweiten Ventilanordnung 96 und der weiteren zweiten Ventilanordnung 96A ein Ventil 116 vorgesehen, das ebenfalls als Wegeventil ausgebildet ist und zwei Schaltstellungen aufweist. Bei der Ausführungsform der Fig. 4 sind die weiteren Pumpenanschlüsse 95, 95A direkt mit dem Tank verbunden.

Hierbei sind die erste Ventilanordnung 90 und die weitere erste Ventilanordnung 90A in der jeweiligen zweiten Schaltstellung mit einem Anschluss des Ventils 116 verbunden, das eine dritte Ventilanordnung bildet. In einer ersten Stellung des Ventils 106 ist dieser Anschluss direkt mit dem ersten Zylinderanschluss 103 verbunden. In der zweiten Schaltstellung ist dieser Anschluss direkt mit dem zweiten Zylinderanschluss 105 verbunden.

Die generelle Funktionsweise ist dabei die gleiche wie bei der Ausführungsform der Fig. 2 und 3. Die Pumpe des inaktiven Teils des Doppelkupplungsgetriebes kann dazu verwendet werden, entweder den ersten Zylinderanschluss 103 oder den zweiten Zylinderanschluss 105 zu versorgen, wobei dies mittels des Ventils 116 alternativ ausgewählt wird.

Bei dieser Ausführungsform ist ferner von Vorzug, dass, unabhängig davon, ob der erste Zylinderanschluss 103 oder der zweite Zylinderanschluss 105 mit Hydraulikfluid versorgt wird, der Sauganschluss der jeweiligen Pumpe direkt mit dem Tank verbunden ist.

In den Fig. 2 bis 4 ist jeweils schematisch eine Trennlinie T zwischen dem jeweiligen Kupplungs-Hydraulikkreis und dem jeweiligen Schalt-Hydraulikkreis eingezeichnet.

Bei den Hydraulikkreisen der Fig. 2 bis 3 werden jeweils eine Pumpe 86 und eine weitere Pumpe 86A parallel an einen einzelnen Schalt-Hydraulikzylinder 58 angeschlossen, mittels dessen vorzugsweise sämtliche Gangstufen des Getriebes 74 schaltbar sind.

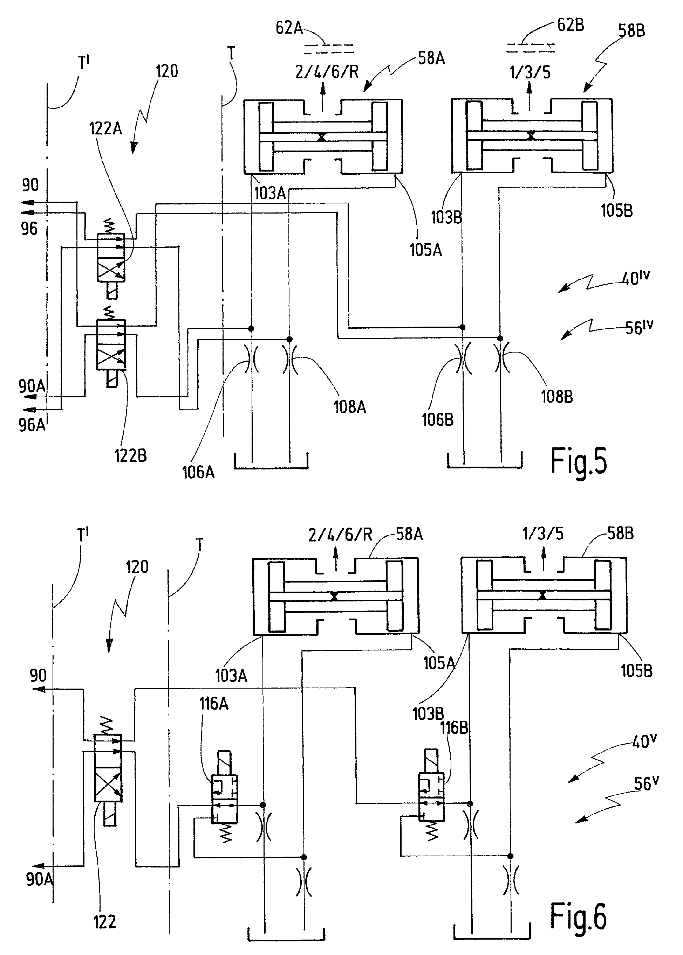

Alternativ ist es möglich, wie es in den nachfolgenden Fig. 5 und 6 dargestellt ist, zur Betätigung der Gangstufen des Getriebes einen ersten Schalt-Hydraulikzylinder 58B und einen zweiten Schalt-Hydraulikzylinder 58A bereitzustellen. Besonders bevorzugt ist es, wenn der erste Schalt-Hydraulikzylinder 58B beispielsweise mittels einer ersten Schaltwelle 62B dazu ausgelegt ist, die Gangstufen 1/3/5/... des ersten Teilgetriebes 80 zu schalten, und wenn der weitere Schalt-Hydraulikzylinder 58A dazu eingerichtet ist, die Gangstufen 2/4/6/... des zweiten Teilgetriebes 82 zu schalten. Die Rückwärtsgangstufe kann einem der zwei Teilgetriebe zugeordnet sein und ist in Fig. 5 beispielhaft dem zweiten Teilgetriebe 82 zugeordnet.

In Fig. 5 ist eine Trennlinie T gezeigt, die darstellt, wie die Kupplungs-Hydraulikkreise 42', 42" der Fig. 2 oder 3 dazu verwendet werden können, ebenfalls zwei Schalt-Hydraulikzylinder 58B, 58A anzusteuern. In einer bevorzugten Ausführungsform werden die der ersten Pumpe 86 zugeordneten Ventilanordnungen 90, 96 bzw. 112 mit dem ersten Zylinderanschluss 103B bzw. dem zweiten Zylinderanschluss 105B des ersten Schalt-Hydraulikzylinders 58B verbunden. In entsprechender Weise werden die der weiteren Pumpe 86A zugeordneten Ventilanordnungen 90A, 96A bzw. 112A mit dem ersten Zylinderanschluss 103A bzw. dem zweiten Zylinderanschluss 105A des weiteren Schalt-Hydraulikzylinders 58A verbunden.

Hierdurch ist jedem der Schalt-Hydraulikzylinder eindeutig eine der Pumpen zugeordnet.

Der Vollständigkeit halber sei ferner erwähnt, dass den Zylinderanschlüssen 103, 105 jeweils zugeordnete dritte und vierte Blenden 106B, 108B bzw. 106A, 108A zugeordnet sein können.

In einer Variante der oben beschriebenen Ausführungsform zu Fig. 5 ist zwischen den Ventilanordnungen 90, 96, 90A, 96A bzw. 112, 112A und den jeweiligen Zylinderanschlüssen 103B, 105B, 103A, 105A eine Umschaltventilanordnung 120 vorgesehen. Die Umschaltventilanordnung 120 ist ebenfalls vorzugsweise durch einfache (nicht proportionale) Wegeventile 122A, 122B gebildet, die elektromagnetisch angesteuert und in eine Position vorgespannt sind. In der vorgespannten Position (ohne elektromagnetische Ansteuerung) sind die Ventilanordnungen mit den Zylinderanschlüssen verbunden, wie oben beschrieben. Wenn die Wegeventile 122A, 122B betätigt werden, werden die Verbindungen der Ventilanordnungen und der Zylinderanschlüsse vertauscht, derart, dass mittels der ersten Pumpe 86 der weitere Schalt-Hydraulikzylinder 58A betätigt werden kann, wobei mittels der weiteren Pumpe 86A der erste Schalt-Hydraulikzylinder 58B betätigt werden kann. Die Wegeventile 122A und 122B können jedoch auch einstückig in einem kompakten Wegeventil mit einer Magneteinstelleinheit und einer Rückstellfeder zusammengefasst sein.

Hierdurch kann für den Ausfall der einen oder der anderen Pumpe ein Notfallbetrieb eingerichtet werden, bei dem nach wie vor ein Schalten möglich ist (wenngleich unter Komforteinschränkungen, bei einem Doppelkupplungsgetriebe beispielsweise mit Zugkraftunterbrechung).

Die Umschaltventilanordnung 120 wird dabei zwischen dem Kupplungs-Hydraulikkreis 42 und dem Schalt-Hydraulikkreis 56^{IV} angeschlossen, derart, dass eine Trennlinie T' eingerichtet wird.

In Fig. 6 ist eine weitere Ausführungsform eines Hydraulikkreises 40^{V} dargestellt, bei dem der Schalt-Hydraulikkreis 56^{V} ebenfalls einen ersten Schalt-Hydraulikzylinder 58B und einen weiteren Schalt-Hydraulikzylinder 58A aufweist.

Um die zwei Schalt-Hydraulikzylinder 58B, 58A mittels des Kupplungs-Hydraulikkreises 42^{III} der Fig. 4 ansteuern zu können, ist jedem der Schalt-Hydraulikzylinder eine eigene Ventilanordnung 116B, 116A zugeordnet. Dabei kann, wie durch eine Trennlinie T angedeutet, das Ventil 90 der Fig. 4 fest mit dem Ventil 116B des ersten Schalt-Hydraulikzylinders 58B verbunden sein, wobei die weitere Ventilanordnung 90A fest mit der weiteren dritten Ventilanordnung 116A des weiteren Schalt-Hydraulikzylinders 58A fest verbunden ist.

Alternativ kann, wie durch eine Trennlinie T' angedeutet, auch wiederum eine Umschaltventilanordnung 120 dazwischengeschaltet werden, die im vorliegenden Fall durch ein einzelnes Wegeventil 122 gebildet sein kann, wobei die Funktionsweise der Umschaltventilanordnung 120 die gleiche ist wie bei der Ausführungsform der Fig. 5.

Im Folgenden wird beispielhaft ein Verfahren zum Anfahren und zum Hochschalten bis in die Gangstufe 3 auf der Grundlage des Hydraulikkreises 40^{V} der Fig. 6 beschrieben.

Zunächst wird abgefragt, ob beide Reibkupplungen 76, 78 des Doppelkupplungsgetriebes 74 geöffnet sind, und ob kein Gang eingelegt wird. Anschließend wird die erste Ventilanordnung 90 (Fig. 4) bestromt, so dass diese umschaltet und die erste Pumpe 86 mit der Ventilanordnung 116B des ersten Schalt-Hydraulikzylinders 58B verbunden wird.

Anschließend wird der Motor der ersten Pumpe 86 in Rotation versetzt, so dass die erste Pumpe 86 über die dritte Ventilanordnung 116B den Schalt-Hydraulikzylinder 58B in Schaltrichtung versetzt, bis der erste Gang eingelegt wird.

Falls über einen manuellen Wählhebel vom Fahrer eine Vorwärtsfahrt ausgesucht ist, kann parallel hierzu die weitere erste Ventilanordnung 90A bestromt werden, und durch Antreiben der zweiten Pumpe 86A kann über die weitere dritte Ventilanordnung 116A der zweite Schalt-Hydraulikzylinder 58A in Schaltrichtung bewegt werden, um die Gangstufe 2 einzulegen.

Sobald die erste Gangstufe und/oder die zweite Gangstufe eingelegt ist, kann die Drehzahl des jeweiligen Motors der Pumpen 86, 86A wieder heruntergefahren werden.

Anschließend wird zumindest die erste Ventilanordnung 90 abgeschaltet, so dass die erste Pumpe 86 mit dem ersten Kupplungs-Hydraulikzylinder 84 verbunden ist.

Anschließend wird die Drehzahl des ersten Motors der ersten Pumpe 86 erhöht, so dass der erste Kupplungs-Hydraulikzylinder 84 in Schließrichtung der ersten Kupplung 76 betätigt wird, wodurch das Fahrzeug anfährt.

Zum Schalten in die Gangstufe 2 wird überprüft, ob die weitere erste Ventilanordnung 90A abgeschaltet ist, ob also die zweite Pumpe 86A mit dem zweiten Kupplungs-Hydraulikzylinder 84A verbunden ist. Wenn dies der Fall ist, wird die Drehzahl des Elektromotors der zweiten Pumpe 86A erhöht, um die zugeordnete zweite Reibkupplung 78 zu schließen. Gleichzeitig wird die erste Pumpe 86 entweder abgeschaltet oder aktiv in entgegengesetzter Drehrichtung betrieben, um den ersten Kupplungs-Hydraulikzylinder 84 leerzusaugen, und folglich die erste Reibkupplung 76 zu öffnen. Hierdurch kann in überschneidender Weise ein Gangwechsel von der ersten in die zweite Gangstufe ohne Zugkraftunterbrechung erfolgen.

Während der Fahrt in der Gangstufe 2 wird die erste Ventilanordnung 90 wiederum umgeschaltet, um dann über die dritte Ventilanordnung 116B in dem ersten Teilgetriebe 80 die Gangstufe 3 einzulegen.

Anschließend wird die weitere erste Ventilanordnung 90A wieder abgeschaltet, und es kann anschließend wiederum ein Gangwechsel von Gangstufe 2 nach Gangstufe 3 erfolgen, indem der Motor der ersten Pumpe 86 wiederum angetrieben wird, um die erste Reibkupplung 76 zu schließen, und gleichzeitig bzw. synchron hiermit die zweite Reibkupplung 78 geöffnet wird, indem die weitere Pumpe 86A nicht oder in entgegengesetzter Drehrichtung angetrieben wird.

## Patentansprüche

1. Hydraulikkreis (40) für einen Kraftfahrzeugantriebsstrang (10), der eine Reibkupplung (14; 76, 78) zur Übertragung von Antriebsmoment, insbesondere in Form einer Anfahrkupplung, und ein Getriebe (16; 74) mit wenigstens zwei Gangstufen (1, 2) aufweist, die mittels einer Schaltkupplungsanordnung (30) ein- und auslegbar sind, wobei die Reibkupplung (14; 76, 78) mittels eines Kupplungs-Hydraulikzylinders (44; 82) betätigbar ist, der zur Betätigung der Reibkupplung (14; 76, 78) direkt mit einem Pumpenanschluss (52) einer elektromotorisch angetriebenen Pumpe (46; 86) verbunden ist, derart, dass die Reibkupplung (14; 76, 78) durch Verändern der Drehzahl (n) der Pumpe (46; 86) betätigbar ist, und mit einer Schalt-Aktuatoranordnung zur Betätigung der Schaltkupplungsanordnung (30),
**dadurch gekennzeichnet, dass**
zwischen dem Pumpenanschluss (52) und dem Kupplungs-Hydraulikzylinder (44; 82) eine erste Ventilanordnung (70; 90) angeordnet ist, die in einer ersten Ventilstellung eine direkte Verbindung (54) des Pumpenanschlusses (52) mit dem Kupplungs-Hydraulikzylinder (44; 82) einrichtet und die in einer zweiten Ventilstellung eine direkte Verbindung (72) des Pumpenanschlusses (52) mit einem Schalt-Hydraulikzylinder (58) einrichtet, der mit der Schaltkupplungsanordnung (30) koppelbar ist, derart, dass die Schaltkupplungsanordnung (30) in der zweiten Ventilstellung durch Verändern der Drehzahl (n) der Pumpe (46; 86) in einer ersten Schaltrichtung (64) betätigbar ist.

2. Hydraulikkreis nach Anspruch 1, **dadurch gekennzeichnet, dass** die Pumpe (86) als bidirektionale Pumpe mit einem ersten Pumpenanschluss (52) und einem zweiten Pumpenanschluss (95) ausgebildet ist.

3. Hydraulikkreis nach Anspruch 2, **dadurch gekennzeichnet, dass** der Schalt-Hydraulikzylinder als doppeltwirkender Zylinder (58') ausgebildet ist, der einen ersten, mit der ersten Ventilanordnung (70; 90) verbundenen Zylinderanschluss (103) und einen zweiten Zylinderanschluss (105) aufweist, wobei eine zweite Ventilanordnung (96) zwischen dem zweiten Pumpenanschluss (95) und dem zweiten Zylinderanschluss (105) angeordnet ist, derart, dass die Schaltkupplungsanordnung (30) durch Verändern der Drehzahl (n) der Pumpe (86) in einer Drehrichtung in der ersten Schaltrichtung (64) und bei umgekehrter Drehrichtung in einer zweiten Schaltrichtung (66) betätigbar ist.

4. Hydraulikkreis nach Anspruch 3, **dadurch gekennzeichnet, dass** die erste Ventilanordnung (70; 90) und die zweite Ventilanordnung (96) so angesteuert sind, dass sie gleichzeitig betätigbar sind.

5. Hydraulikkreis nach Anspruch 3 oder 4, **dadurch gekennzeichnet, dass** die erste Ventilanordnung (70; 90) und die zweite Ventilanordnung (96) in ein Ventil (112) integriert sind.

6. Hydraulikkreis nach Anspruch 1 oder 2, **dadurch gekennzeichnet, dass** der Schalt-Hydraulikzylinder als doppeltwirkender Zylinder (58') ausgebildet ist, der einen ersten und einen zweiten Zylinderanschluss (103, 105) aufweist, wobei zwischen der ersten Ventilanordnung (90) und dem Schalt-Hydraulikzylinder (58') eine dritte Ventilanordnung (116) angeordnet ist, die dazu ausgebildet ist, die erste Ventilanordnung (90) mit dem ersten oder mit dem zweiten Zylinderanschluss (103, 105) zu verbinden, um die Schaltkupplungsanordnung (30) in der ersten oder in einer zweiten Schaltrichtung (64, 66) zu betätigen.

7. Hydraulikkreis nach einem der Ansprüche 1 bis 6, **dadurch gekennzeichnet, dass** der Hydraulikkreis einen weiteren Kupplungs-Hydraulikzylinder (84A) zum Betätigen einer weiteren Reibkupplung (78) und eine weitere Pumpe (86A) aufweist, die elektromotorisch angetrieben ist und einen weiteren Pumpenanschluss (52A) aufweist, der zur Betätigung der weiteren Reibkupplung (78) direkt mit dem weiteren Kupplungs-Hydraulikzylinder (84A) verbunden ist.

8. Hydraulikkreis nach Anspruch 7, **dadurch gekennzeichnet, dass** der Hydraulikkreis eine weitere erste Ventilanordnung (90A) aufweist, die in einer ersten Ventilstellung eine direkte Verbindung (54A) des weiteren Pumpenanschlusses (52A) mit dem weiteren Kupplungs-Hydraulikzylinder (84A) einrichtet und die in einer zweiten Ventilstellung eine direkte Verbindung (72) des weiteren Pumpenanschlusses (52A) mit dem Schalt-Hydraulikzylinder (58') und/oder mit einem weiteren Schalt-Hydraulikzylinder (58A) einrichtet, derart, dass die Schaltkupplungsanordnung (30) in der zweiten Ventilstellung der weiteren ersten Ventilanordnung (90A) durch Verändern der Drehzahl (n) der weiteren Pumpe (86A) in einer ersten Schaltrichtung (64) betätigbar ist.

9. Hydraulikkreis nach einem der Ansprüche 1 bis 8, **dadurch gekennzeichnet, dass** die erste Ventilanordnung (70; 90) und/oder die zweite Ventilanordnung (96) und/oder die dritte Ventilanordnung (116) als Wegeventil ausgebildet ist.

10. Hydraulikkreis nach einem der Ansprüche 1 bis 9, **dadurch gekennzeichnet, dass** die Verbindung (54) zwischen der ersten Ventilanordnung (90) und dem Kupplungs-Hydraulikzylinder (84) über eine Drossel oder Blende (92) mit einem Niederdruckbereich (50) verbunden ist.

11. Hydraulikkreis nach einem der Ansprüche 1 bis 10, **dadurch gekennzeichnet, dass** die Verbindung (72) zwischen dem Schalt-Hydraulikzylinder (58'; 58B; 58A) und einer Ventilanordnung (90; 96; 116), über die der Schalt-Hydraulikzylinder (58'; 58B; 58A) mit einem Pumpenanschluss (52; 95) verbindbar ist, über eine Drossel oder Blende (106, 108) mit einem Niederdruckbereich (50) verbunden ist.

12. Hydraulikkreis nach einem der Ansprüche 1 bis 11, **dadurch gekennzeichnet, dass** der Schalt-Hydraulikzylinder (58'; 58B) mit einer Schaltwelle (62; 62B) gekoppelt ist, die mittels des Schalt-Hydraulikzylinders (58'; 58B) zumindest in der ersten Schaltrichtung (64) bewegbar ist und die mittels eines Wählantriebs (98) in einer Wählrichtung (100) bewegbar ist.

13. Hydraulikkreis nach Anspruch 8 und 12, **dadurch gekennzeichnet, dass** der weitere Schalt-Hydraulikzylinder (58A) mit einer weiteren Schaltwelle (62A) gekoppelt ist, die mittels des weiteren Schalt-Hydraulikzylinders (58A) zumindest in der ersten Schaltrichtung bewegbar und mittels eines Wählantriebs in einer Wählrichtung bewegbar ist.

14. Antriebsstrang (10) für ein Kraftfahrzeug, mit einer Reibkupplung (14; 76, 78) und einem Getriebe (16; 74) mit wenigstens zwei Gangstufen (1, 2) und mit einem Hydraulikkreis (40) nach einem der Ansprüche 1 bis 13.

15. Antriebsstrang nach Anspruch 14, mit einer Doppelkupplungsanordnung, (76, 78) deren Eingang mit einem Antriebsmotor (12) verbindbar ist und deren Ausgänge mit einem ersten bzw. einem zweiten Teilgetriebe (80, 82) eines Doppelkupplungsgetriebes (74) verbunden sind, wobei eine erste Reibkupplung (76) der Doppelkupplungsanordnung mittels der Pumpe (86) betätigbar ist, wobei eine zweite Reibkupplung (78) der Doppelkupplungsanordnung mittels einer weiteren Pumpe (86A) betätigbar ist, und wobei die Gangstufen des ersten und des zweiten Teilgetriebes (80, 82) mittels wenigstens einer Schaltwelle (62; 62B, 62A) betätigbar sind, die in Schaltrichtung (64, 66) mittels eines Schalt-Hydraulikzylinders (58'; 58B; 58A) bewegbar ist.

16. Antriebsstrang nach Anspruch 15, wobei die Pumpe (86) und die weitere Pumpe (86A) parallel an einen einzelnen Schalt-Hydraulikzylinder (58') angeschlossen sind.

17. Antriebsstrang nach Anspruch 15, wobei die Pumpe (86) an einen ersten Schalt-Hydraulikzylinder (58B) angeschlossen ist und wobei die weitere Pumpe (86A) an einen weiteren Schalt-Hydraulikzylinder (58A) angeschlossen ist.

## Claims

1. Hydraulic circuit (40) for a motor vehicle drive train (10) which comprises a friction clutch (14; 76, 78) for transmission of drive torque, particularly in the form of a starting clutch, and which comprises a transmission (16; 74) including at least two gear stages (1, 2) that can be engaged and disengaged by means of a shift clutch arrangement (30), wherein the friction clutch (14; 76, 78) can be actuated by means of a clutch hydraulic cylinder (44; 82) which is, for actuating the friction clutch (14; 76, 78), connected directly to a pump port (52) of a pump (46; 86) that is driven by an electric motor, such that the friction clutch (14; 76, 78) can be actuated by changing the speed (n) of the pump (46; 86), and including a shift actuator arrangement for actuating the shift clutch arrangement (30),
**characterized in that**
a first valve arrangement (70; 90) is arranged between the pump port (52) and the clutch hydraulic cylinder (44; 82), which first valve arrangement (70; 90) establishes in a first valve position a direct connection (54) of the pump port (52) with the clutch hydraulic cylinder (44; 82), and which establishes in a second valve position a direct connection (72) of the pump port (52) with a shift hydraulic cylinder (58) which can be coupled to the shift clutch arrangement (30) such that the shift clutch arrangement (30), in the second valve position, can be actuated in a first shift direction (64) by changing the speed (n) of the pump (46; 86).

2. Hydraulic circuit according to claim 1, **characterized in that** the pump (86) is formed as a bi-directional pump including a first pump port (52) and a second pump port (95).

3. Hydraulic circuit according to claim 2, **characterized in that** the shift hydraulic cylinder is formed as a double acting cylinder (58') which includes a first cylinder port (103) connected to the first valve arrangement (70; 90) and a second cylinder port (105), wherein a second valve arrangement (96) is arranged between the second pump port (95) and the second cylinder port (105), such that the shift clutch arrangement (30) can be actuated in a first shift direction (64) by changing the speed (n) of the pump (86) in a rotational direction, and can be actuated in a second shift direction (66) in case that the rotational direction is reversed.

4. Hydraulic circuit according to claim 3, **characterized in that** the first valve arrangement (70; 90) and the second valve arrangement (96) are controlled such that they can be actuated simultaneously.

5. Hydraulic circuit according to claim 3 or 4, **characterized in that** the first valve arrangement (70; 90) and the second valve arrangement (96) are integrated into a valve (112).

6. Hydraulic circuit according to claim 1 or 2, **characterized in that** the shift hydraulic cylinder is formed as a double acting cylinder (58') which includes a first and a second cylinder port (103, 105), wherein a third valve arrangement (116) is arranged between the first valve arrangement (90) and the shift hydraulic cylinder (58'), which third valve arrangement (116) is adapted to connect the first valve arrangement (90) with the first or with the second cylinder port (103, 105) in order to actuate the shift clutch arrangement (30) in the first or in the second shift direction (64, 66).

7. Hydraulic circuit according to any of claims 1 to 6, **characterized in that** the hydraulic circuit comprises a further clutch hydraulic cylinder (84A) for actuating a further friction clutch (78) and comprises a further pump (86A) that is driven by an electric motor and that comprises a further pump port (52A) which, for actuating the further friction clutch (78), is connected directly to the further clutch hydraulic cylinder (84A).

8. Hydraulic circuit according to claim 7, **characterized in that** the hydraulic circuit comprises a further first valve arrangement (90A) which establishes in a first valve position a direct connection (54A) of the further pump port (52A) with the further clutch hydraulic cylinder (84A), and which establishes in a second valve position a direct connection (72) of the further pump port (52A) with the shift hydraulic cylinder (58') and/or with a further shift hydraulic cylinder (58A), such that the shift clutch arrangement (30), in the second valve position of the further first valve arrangement (90A), can be actuated in a first shift direction (64) by changing the speed (n) of the further pump (86A).

9. Hydraulic circuit according to any of claims 1 to 8, **characterized in that** the first valve arrangement (70; 90) and/or the second valve arrangement (96) and/or the third valve arrangement (116) is formed as a directional valve.

10. Hydraulic circuit according to any of claims 1 to 9, **characterized in that** the connection (54) between the first valve arrangement (90) and the clutch hydraulic cylinder (84) is connected with a low pressure area (50) via a restriction or an orifice (92).

11. Hydraulic circuit according to any of claims 1 to 10, **characterized in that** the connection (72) between the shift hydraulic cylinder (58'; 58B; 58A) and a valve arrangement (90; 96; 116) via which the shift hydraulic cylinder (58'; 58B; 58A) can be connected to a pump port (52; 95) is connected with a low pressure area (50) via a restriction or an orifice (106, 108).

12. Hydraulic circuit according to any of claims 1 to 11, **characterized in that** the shift hydraulic cylinder (58'; 58B) is coupled to a shift shaft (62; 62B) which can be moved at least in the first shift direction (64) by means of the shift hydraulic cylinder (58'; 58B), and which can be moved in a selection direction (100) by means of a selection drive (98).

13. Hydraulic circuit according to claims 8 and 12, **characterized in that** the further shift hydraulic cylinder (58A) is coupled to a further shift shaft (62A) which can be moved at least in the first shift direction by means of the further shift hydraulic cylinder (58A), and which can be moved in a selection direction by means of a selection drive.

14. Drive train (10) for a motor vehicle, including a friction clutch (14; 76, 78) and a transmission (16; 74) which has at least two gear stages (1, 2), and including a hydraulic circuit (40) according to any of claims 1 to 13.

15. Drive train according to claim 14, comprising a dual clutch arrangement (76, 78), the input of which can be connected to a drive motor (12) and the outputs of which are connected to a first and a second partial transmission (80, 82) of a dual clutch transmission (74), respectively, wherein a first friction clutch (76) of the dual clutch arrangement can be actuated by means of the pump (86), wherein a second friction clutch (78) of the dual clutch arrangement can be actuated by means of a further pump (86A), and wherein the gear stages of the first and second partial transmissions (80, 82) can be actuated by means of at least one shift shaft (62; 62B, 62A) which can be moved in a shift direction (64, 66) by means of a shift hydraulic cylinder (58'; 58B; 58A).

16. Drive train according to claim 15, wherein the pump (86) and the further pump (86A) are connected in parallel to a single shift hydraulic cylinder (58').

17. Drive train according to claim 15, wherein the pump (86) is connected to a first shift hydraulic cylinder (58B), and wherein the further pump (86A) is connected to a further shift hydraulic cylinder (58A).

## Revendications

1. Circuit hydraulique (40) pour une chaîne cinématique d'un véhicule automobile (10) qui présente un embrayage à friction (14 ; 76, 78) pour le transfert d'un couple d'entraînement, en particulier sous la forme d'un embrayage de démarrage, et une transmission (16 ; 74) comprenant au moins deux rapport de vitesses (1, 2), qui peuvent être enclenchés et désenclenchés au moyen d'un agencement d'embrayage de commutation (30), l'embrayage à friction (14 ; 76, 78) pouvant être actionné au moyen d'un cylindre hydraulique d'embrayage (44 ; 82) qui, pour l'actionnement de l'embrayage à friction (14 ; 76, 78), est connecté directement à un raccord de pompe (52) d'une pompe (46 ; 86) entraînée par un moteur électrique de telle sorte que l'embrayage à friction (14 ; 76, 78) puisse être actionné par variation de la vitesse de rotation (n) de la pompe (46 ; 86), et comprenant un agencement d'actionneur de commutation pour actionner l'agencement d'embrayage de commutation (30),
**caractérisé en ce**
**qu'**entre le raccord de pompe (52) et le cylindre hydraulique d'embrayage (44 ; 82) est disposé un premier agencement de soupape (70 ; 90) qui, dans une première position de soupape, établit une connexion directe (54) du raccord de pompe (52) avec le cylindre hydraulique d'embrayage (44 ; 82) et qui, dans une deuxième position de soupape, établit une connexion directe (72) du raccord de pompe (52) avec un cylindre hydraulique de commutation (58) qui peut être accouplé à l'agencement d'embrayage de commutation (30) de telle sorte que l'agencement d'embrayage de commutation (30), dans la deuxième position de soupape, puisse être actionné dans une première direction de commutation (64) par variation de la vitesse de rotation (n) de la pompe (46 ; 86).

2. Circuit hydraulique selon la revendication 1, **caractérisé en ce que** la pompe (86) est réalisée sous forme de pompe bidirectionnelle avec un premier raccord de pompe (52) et un deuxième raccord de pompe (95).

3. Circuit hydraulique selon la revendication 2, **caractérisé en ce que** le cylindre hydraulique de commutation est réalisé sous forme de cylindre à double action (58') qui présente un premier raccord de cylindre (103) connecté au premier agencement de soupape (70 ; 90) et un deuxième raccord de cylindre (105), un deuxième agencement de soupape (96) étant disposé entre le deuxième raccord de pompe (95) et le deuxième raccord de cylindre (105), de telle sorte que l'agencement d'embrayage de commutation (30) puisse être actionné par variation du régime (n) de la pompe (86) dans un sens de rotation dans la première direction de commutation (64) et, dans le sens de rotation inverse, dans une deuxième direction de commutation (66).

4. Circuit hydraulique selon la revendication 3, **caractérisé en ce que** le premier agencement de soupape (70 ; 90) et le deuxième agencement de soupape (96) sont commandés de manière à pouvoir être actionnés simultanément.

5. Circuit hydraulique selon la revendication 3 ou 4, **caractérisé en ce que** le premier agencement de soupape (70 ; 90) et le deuxième agencement de soupape (96) sont intégrés dans une soupape (112).

6. Circuit hydraulique selon la revendication 1 ou 2, **caractérisé en ce que** le cylindre hydraulique de commutation est réalisé sous forme de cylindre à double action (58') qui présente un premier et un deuxième raccord de cylindre (103, 105), un troisième agencement de soupape (116) étant disposé entre le premier agencement de soupape (90) et le cylindre hydraulique de commutation (58'), le troisième agencement de soupape étant réalisé de manière à relier le premier agencement de soupape (90) au premier ou au deuxième raccord de cylindre (103, 105), afin d'actionner l'agencement d'embrayage de commutation (30) dans la première ou dans une deuxième direction de commutation (64, 66).

7. Circuit hydraulique selon l'une quelconque des revendications 1 à 6, **caractérisé en ce que** le circuit hydraulique présente un cylindre hydraulique d'embrayage supplémentaire (84A) pour l'actionnement d'un embrayage à friction supplémentaire (78) et une pompe supplémentaire (86A) qui est entraînée par un moteur électrique et qui présente un raccord de pompe supplémentaire (52A) qui est connecté directement au cylindre hydraulique d'embrayage supplémentaire (84A) pour l'actionnement de l'embrayage à friction supplémentaire (78).

8. Circuit hydraulique selon la revendication 7, **caractérisé en ce que** le circuit hydraulique présente un premier agencement de soupape supplémentaire (90A) qui, dans une première position de soupape, établit une connexion directe (54A) du raccord de pompe supplémentaire (52A) avec le cylindre hydraulique d'embrayage supplémentaire (84A) et qui, dans une deuxième position de soupape, établit une connexion directe (72) du raccord de pompe supplémentaire (52A) avec le cylindre hydraulique de commutation (58') et/ou avec un cylindre hydraulique de commutation supplémentaire (58A), de telle sorte que l'agencement d'embrayage de commutation (30), dans la deuxième position de soupape du premier agencement de soupape supplémentaire (90A), puisse être actionné par variation de la vitesse de rotation (n) de la pompe supplémentaire (86A) dans une première direction de commutation (64).

9. Circuit hydraulique selon l'une quelconque des revendications 1 à 8, **caractérisé en ce que** le premier agencement de soupape (70 ; 90) et/ou le deuxième agencement de soupape (96) et/ou le troisième agencement de soupape (116) sont réalisés sous forme de soupape à tiroir.

10. Circuit hydraulique selon l'une quelconque des revendications 1 à 9, **caractérisé en ce que** la connexion (54) entre le premier agencement de soupape (90) et le cylindre hydraulique d'embrayage (84) est connectée par le biais d'un étranglement ou d'un diaphragme (92) à une région basse pression (50).

11. Circuit hydraulique selon l'une quelconque des revendications 1 à 10, **caractérisé en ce que** la connexion (72) entre le cylindre hydraulique de commutation (58' ; 58B ; 58A) et un agencement de soupape (90 ; 96 ; 116), par le biais duquel le cylindre hydraulique de commutation (58' ; 58B ; 58A) peut être connecté à un raccord de pompe (52 ; 95), est connectée par le biais d'un étranglement ou d'un diaphragme (106, 108) à une région basse pression (50).

12. Circuit hydraulique selon l'une quelconque des revendications 1 à 11, **caractérisé en ce que** le cylindre hydraulique de commutation (58' ; 58B) est accouplé à un arbre de commutation (62 ; 62B) qui peut être déplacé au moyen du cylindre hydraulique de commutation (58' ; 58B) au moins dans la première direction de commutation (64) et qui peut être déplacé au moyen d'un entraînement sélectif (98) dans une direction de sélection (100).

13. Circuit hydraulique selon les revendications 8 et 12, **caractérisé en ce que** le cylindre hydraulique de commutation supplémentaire (58A) est accouplé à un arbre de commutation supplémentaire (62A) qui peut être déplacé au moyen du cylindre hydraulique de commutation supplémentaire (58A) au moins dans la première direction de commutation et qui peut être déplacé au moyen d'un entraînement sélectif dans une direction de sélection.

14. Chaîne cinématique (10) pour un véhicule automobile, comprenant un embrayage à friction (14 ; 76, 78) et une transmission (16 ; 74) avec au moins deux rapports de vitesses (1, 2) et avec un circuit hydraulique (40) selon l'une quelconque des revendications 1 à 13.

15. Chaîne cinématique selon la revendication 14, comprenant un agencement à double embrayage (16, 78), dont l'entrée peut être connectée à un moteur d'entraînement (12) et dont les sorties sont connectées à une première, respectivement une deuxième, transmission partielle (80, 82) d'une transmission à double embrayage (74), un premier embrayage à friction (76) de l'agencement à double embrayage pouvant être actionné au moyen de la pompe (86), un deuxième embrayage à friction (78) de l'agencement à double embrayage pouvant être actionné au moyen d'une pompe supplémentaire (86A), et les rapports de vitesses de la première et de la deuxième transmission partielle (80, 82) pouvant être actionnés au moyen d'au moins un arbre de commutation (62 ; 62B, 62A) qui est déplaçable dans la direction de commutation (64, 66) au moyen d'un cylindre hydraulique de commutation (58'; 58B ; 58A).

16. Chaîne cinématique selon la revendication 15, dans laquelle la pompe (86) et la pompe supplémentaire (86A) sont raccordées parallèlement à un cylindre hydraulique de commutation unique (58').

17. Chaîne cinématique selon la revendication 15, dans laquelle la pompe (86) est raccordée à un premier cylindre hydraulique de commutation (58B) et la pompe supplémentaire (86A) est raccordée à un cylindre hydraulique de commutation supplémentaire (58A).
